(19) Europäisches Patentamt
European Patent Office
Office européen des brevets

(11) Veröffentlichungsnummer: **0 000 347**
**A1**

# (12) EUROPÄISCHE PATENTANMELDUNG

(21) Anmeldenummer: **78100254.8**

(22) Anmeldetag: **28.06.78**

(51) Int. Cl.$^2$: **C08G18/08**, C08G18/48, C08G18/80

(30) Priorität: **06.07.77 DE 2730514**

(43) Veröffentlichungstag der Anmeldung: **24.01.79**
**Patentblatt 79/2**

(84) Benannte Vertragsstaaten: **BE DE FR GB**

(71) Anmelder: **Bayer Aktiengesellschaft, Zentralbereich Patente,Marken und Lizenzen Bayerwerk, D-5090 Leverkusen 1 (DE)**

(72) Erfinder: **Markusch, Peter, Dr., River View Terrace 1014, New Martinsville W.VA 26 155 (US)**
**Dieterich, Dieter, Dr., Ludwig-Girtler-Strasse 1, D-5090 Leverkusen 1 (DE)**

(54) **Elektrolytstabile wässrige Lösungen von Polyurethanionomeren und Verfahren zur Herstellung dieser Ionomeren.**

(57) Elektrolytstabile wässrige Lösungen von Polyurethanionomeren mit im wesentlichen linearem Molekularaufbau, welche sowohl hydrophile Polyalkylenoxid-Polyätherketten als auch ionische Gruppen eingebaut enthalten, sowie ein Verfahren zur Herstellung der neuen Verbindungen durch Umsetzung von Diisocyanaten mit den üblichen Aufbaukomponenten für Polyurethane mit gegenüber Isocyanatgruppen reaktionsfähigen Gruppen unter Mitverwendung von nichtionische hydrophile Gruppen aufweisenden Aufbaukomponenten und von ionische Gruppen oder in ionische Gruppen überführbaren Gruppen aufweisenden Aufbaukomponenten.

EP 0 000 347 A1

BAYER AKTIENGESELLSCHAFT 5090 Leverkusen, Bayerwerk
Zentralbereich Wr/bc
Patente, Marken und Lizenzen

Verfahren zur Herstellung von in Wasser löslichen Polyurethanen

BEZEICHNUNG GEÄNDERT siehe Titelseite

Wäßrige Lösungen von Polyurethanen oder Polyurethanharnstoffen sind seit langem bekannt (vgl. z.B. Angewandte Chemie, 82, (1970) Seiten 53 bis 55, dort Lit.Zit. 4-8, 10a).

Die in den bekannten, in Wasser löslichen Polyurethanen bzw. Polyurethanharnstoffen eingebauten hydrophilen Zentren können sowohl salzartige, d.h. ionische Gruppen als auch hydrophile nichtionische Gruppen darstellen.

Zu den erstgenannten "Polyurethanionomeren" gehören sowohl chemisch fixierte Kationen, d.h. insbesondere chemisch eingebaute Ammoniumionen aufweisende Polyurethane als auch chemisch fixierte Anionen, d.h. insbesondere chemisch eingebaute Sulfonat- oder Carboxylatgruppen aufweisende Polyurethane. Zu den letztgenannten nichtionischen, in Wasser löslichen gehören insbesondere die Polyäthylenoxidketten aufweisenden Polyurethane bzw. Polyurethanharnstoffe.

Die Lösungen dieser Polyurethane besitzen je nach Art des hydrophilen Zentrums verschiedene, charakteristische Eigenschaftsbilder. So sind Polyurethanionomerlösungen, da die

in ihnen enthaltenen Salzgruppen in ihrer Löslichkeit praktisch nicht temperaturabhängig sind, gegen Erhitzen bis zum Sieden stabil, nichtionische Lösungen koagulieren dagegen beim Erhitzen (bei ca. 60°C), da die Polyäthylenoxid-Ketten bei höherer Temperatur ihre Löslichkeit in Wasser allmählich verlieren. Im Gegensatz zu Ionomeren sind diese Lösungen aber gegen den Zusatz praktisch unbegrenzter Mengen an Elektrolyten beständig und auch nach dem Gefrieren und Auftauen stabil.

Die Empfindlichkeit gegenüber Elektrolyten ist bei Lösungen kationischer Polyurethane besonders groß, aber auch Lösungen von Polyurethan-Polycarboxylaten sind empfindlich. Geringe Mengen von wäßrigen Elektrolytlösungen verursachen Trübungen, größere Mengen führen zu schleimigen oder käsigen Abscheidungen. Auch dann, wenn Ausflockungen nicht auftreten, ändert sich doch der kolloidchemische Zustand, was sich beispielsweise in veränderter Viskosität und Rheologie bemerkbar macht.

Diese Elektrolytinstabilität ist in vielen Fällen außerordentlich nachteilig und erschwert oder hemmt sogar den praktischen Einsatz der Produkte. So ist z.B. für die Verwendung von Polyurethan-Ionomerlösungen zur Herstellung von Pigmentpasten, zur Oberflächenbeschichtung von anorganischen Substraten wie Füllstoffen und Fasern, als Färbereihilfsmittel eine gewisse Beständigkeit gegenüber Elektrolyten erforderlich.

Durch die vorliegende Erfindung werden nunmehr neue in Wasser lösliche Polyurethane zur Verfügung gestellt, die in Form

ihrer wäßrigen Lösung sowohl den Vorteil einer ausgezeichneten Frost- und Elektrolytbeständigkeit als auch den Vorteil einer sehr guten Temperaturbeständigkeit aufweisen. Wie nämlich überraschend gefunden wurde, gelingt die Herstellung derartiger in Wasser löslicher Polyurethane dann, wenn in das Polyurethan sowohl Äthylenoxid-Einheiten aufweisende hydrophile Segmente als auch ionische Gruppen eingebaut werden. Dies ist durchaus überraschend, da sich herausstellte, daß Mischungen von wäßrigen Lösungen ionischer und nichtionischer Polyurethane keineswegs eine derartige Kombination erstrebenswerter Eigenschaften aufweisen. Derartige Mischungen weisen vielmehr vor allem die Nachteile der Einzelbestandteile auf.

Durch den Einbau hydrophiler Polyäthersegmente, entweder innerhalb der Polymer-Hauptkette oder an deren Enden oder auch in Form von seitenständigen Ketten wird ein überraschend wirksamer Schutz von Polyurethanen welche

$$-\overset{|}{\underset{|}{N}}{}^{+}- \;,\; -\underset{|}{S}{}^{+}- \text{ oder } COO^{\ominus}\text{-Gruppen}$$

aufweisen, gegenüber der Einwirkung von Elektrolyten erzielt. Selbst bei hohem Gehalt an kationischen Zentren, z.B. mehr als 20 Milliäquivalenten pro 100 g Polyurethan an

$$-\overset{|}{\underset{|}{N}}{}^{+}- \text{ oder } -\underset{|}{S}{}^{+}- \text{-Gruppen}$$

werden die Lösungen durch verdünnte Natriumchloridlösung nicht mehr gefällt.

Gegenstand der vorliegenden Erfindung sind somit elektrolytstabile wäßrige Lösungen von Polyurethanionomeren mit im wesentlichen linearem Molekularaufbau, gekennzeichnet durch

a) hydrophile Polyalkylenoxid-Polyätherketten mit einem Gehalt an Äthylenoxid-Einheiten von 2 bis 50 Gew.-%, bezogen auf das gesamte Polyurethan
und

b) einen Gehalt an $=N^{\oplus}=$, $-S^{\pm}$ oder $-COO^{\ominus}$-Gruppen von 16 bis 250 Milliäquivalenten pro 100 g.

Gegenstand der vorliegenden Erfindung ist schließlich auch das bevorzugte Verfahren zur Herstellung der erfindungsgemäßen in Wasser löslichen Polyurethane mit im wesentlichen linearer Molekülstruktur durch Umsetzung von organischen Diisocyanaten mit im Sinne der Isocyanatpolyadditionsreaktion difunktionellen endständige gegenüber Isocyanatgruppen reaktionsfähige Wasserstoffatome aufweisenden organischen Verbindungen des Molekulargewichtsbereichs 300 bis 6000 unter Mitverwendung von die Löslichkeit der Polyurethane gewährleistenden Aufbaukomponenten mit hydrophilen Gruppen bzw. in derartige hydrophile Gruppen überführbaren Gruppen, wobei die zumindest teilweise Überführung der letztgenannten Gruppen in hydrophile Gruppen während oder anschließend an die Polyadditionsreaktion erfolgt, sowie gegebenenfalls unter Mitverwendung der in der Polyurethanchemie an sich bekannten Kettenverlängerungsmittel eines unter 300 liegenden Molekulargewichts sowie gegebenenfalls unter Mitverwendung der in der Polyurethanchemie üblichen Hilfs- und Zusatzstoffe, dadurch gekennzeichnet, daß als Aufbaukomponenten mit hydrophilen Gruppen bzw. mit in hydrophile Gruppen überführbaren Gruppen sowohl

a) Mono- oder Diisocyanate und/oder im Sinne der Isocyanatpolyadditionsreaktion mono- oder difunktionelle Verbindungen mit gegenüber Isocyantgruppen reaktionsfähigen

Wasserstoffatomen mit Äthylenoxid-Einheiten aufweisenden hydrophilen Ketten als auch

b) Mono- oder Diisocyanate und/oder im Sinne der Isocyanat-Polyadditionsreaktion mono- oder difunktionelle Verbindungen mit gegenüber Isocyanatgruppen reaktionsfähigen Wasserstoffatomen mit ionischen Gruppen oder in ionische Gruppen überführbaren Gruppen

mitverwendet werden, wobei die Art und Menge bzw. Neutralisierungs- oder Quaternierungsgrad der Komponenten a) und b) so bemessen wird, daß im letztlich erhaltenen Polyurethan 2 bis 50 Gew.-% an Äthylenoxid-Einheiten und 16 bis 250 Milliäquivalent pro 100 g an ionischen Gruppen vorliegen.

Für das bevorzugte, obengenannte Verfahren zur Herstellung der erfindungsgemäßen Polyurethanelastomeren geeignete organische Diisocyanate sind solche der allgemeinen Formel $R(NCO)_2$, wobei R für einen organischen Rest steht, wie er durch Entfernung der Isocyanatgruppen aus einem organischen Diisocyanat des Molekulargewichtsbereichs 112-1000, vorzugsweise 140-400, erhalten wird. Besonders bevorzugte für das erfindungsgemäße Verfahren geeignete Diisocyanate sind solche der angegebenen allgemeinen Formel, bei welchen R für einen zweiwertigen aliphatischen Kohlenwasserstoffrest mit 4-18 Kohlenstoffatomen, einen zweiwertigen cycloaliphatischen Kohlenwasserstoffrest mit 5-15 Kohlenstoffatomen, einen zweiwertigen aromatischen Kohlenwasserstoffrest mit 6-15 Kohlenstoffatomen oder einen araliphatischen Kohlenwasserstoffrest mit 7-15 Kohlenstoffatomen steht. Typische Vertreter von für das erfindungsgemäße Verfahren bevorzugt geeigneten organischen Diisocyanaten sind z.B. Tetramethylendiisocyanat, Hexamethylendiisocyanat, Dodecamethylendiisocyanat, Cyclohexan-1,3- und -1,4-diisocyanat, 1-Isocyanato-3-isocyanatomethyl-3,5,5-trimethylcyclohexan, 4,4'-Diisocyanatodicyclohexylmethan oder auch aromatische Diisocyanate, wie 2,4-Diisocyanatotoluol, 2,6-Diisocyanatotoluol, aus diesen Isomeren bestehende Gemische, 4,4'-Diisocyanatodiphenylmethan, 1,5-Diisocyanatonaphthalin usw.

Für das erfindungsgemäße Verfahren geeignete, im Sinne der Isocyanat-Polyaddition difunktionelle endständige, gegenüber Isocyanat reaktionsfähige Gruppen aufweisende Verbindungen des Molekulargewichtsbereichs 300-6000, vorzugsweise 500-3000, sind insbesondere

1. die in der Polyurethan-Chemie an sich bekannten Dihydroxypolyester aus Dicarbonsäuren, wie Bernsteinsäure, Adipinsäure, Korksäure, Azelainsäure, Sebacinsäure, Phthalsäure, Isophthalsäure, Terephthalsäure, Tetrahydrophthalsäure usw. und Diolen, wie z.B. Äthylenglykol, Propylenglykol-1,2, Propylenglykol-1,3, Diäthylenglykol, Butandiol-1,4, Hexandiol-1,6, Octandiol-1,8, Neopentylglykol, 2-Methypropandiol-1,3, oder die verschiedenen isomeren Bishydroxymethylcyclohexane;

2. die in der Polyurethan-Chemie an sich bekannten Polylactone, wie z.B. die auf den oben genannten zweiwertigen Alkoholen gestartete Polymerisate des ε-Caprolactons;

3. die in der Polyurethan-Chemie an sich bekannten Polycarbonate, wie sie durch Umsetzung beispielsweise der oben genannten Diole mit Diarylcarbonaten oder Phosgen zugänglich sind;

4. die in der Polyurethan-Chemie an sich bekannten Polyäther, wie z.B. die unter Verwendung von zweiwertigen Startermolekülen, wie Wasser, den oben genannten Diolen oder 2 N-H-Bindungen aufweisende Amine hergestellten Polymerisate bzw. Mischpolymerisate des Styroloxids, Propylenoxids, Tetrahydrofurans, Butylenoxids oder Epichlorhydrins. Auch Äthylenoxid kann anteilmäßig mitverwendet werden mit der Maßgabe, daß der verwendete Polyäther maximal ca. 10 Gewichtsprozente an Äthylenoxid enthält. Im allgemeinen werden jedoch solche Polyäther eingesetzt, die ohne Mitverwendung von Äthylenoxid erhalten wurden;

5. die in der Polyurethan-Chemie an sich bekannten Polythioäther, Polythiomischäther, Polythioätherester;

6. die in der Polyurethan-Chemie an sich bekannten Polyacetale, beispielsweise aus den oben genannten Diolen und Formaldehyd; sowie

7. difunktionelle endständige, gegenüber Isocyanatgruppen reaktionsfähige Gruppen aufweisende Polyätherester.

Bevorzugt werden beim erfindungsgemäßen Verfahren Dihydroxypolyester, Dihydroxypolylactone, Dihydroxypolyäther und Dihydroxypolycarbonate eingesetzt.

Grundsätzlich könnten die erfindungsgemäßen Verbindungen jedoch auch ohne Mitverwendung von höhermolekularen Polyhydroxylverbindungen, d.h. ausschließlich unter Verwendung von Diisocyanaten und niedermolekularen Reaktionspartnern (Molgewicht $<$300) hergestellt werden.

Als beim erfindungsgemäßen Verfahren zur Herstellung der wasserlöslichen Polyurethane mitzuverwendende Kettenverlängerer eines unter 300 liegenden Molekulargewichts kommen beispielsweise die bei der Herstellung der Dihydroxypolyester beschriebenen niedermolekularen Diole oder auch Diamine, wie Diaminoäthan, 1,6-Diaminohexan, Piperazin, 2,5-Dimethylpiperazin, 1-Amino-3-aminomethyl-3,5,5-trimethylcyclohexan, 4,4'-Diaminodicyclohexylmethan, 1,4-Diaminocyclohexan, 1,2-Propylendiamin oder auch Hydrazin, Aminosäurehydrazide, Hydrazide von Semicarbazidocarbonsäuren, Bis-hydrazide und Bis-semicarbazide in Betracht.

Geeignete Aufbaukomponenten sind auch z.B. Oleyldiäthanolamin, Stearyldiäthanolamin, Addukte langkettiger Alkylisocyanate an Diäthanolamin oder andere Aminoalkohole, Veresterungsprodukte langkettiger Fettsäuren mit Glycerin oder Trimethylolpropan, Addukte von 6-24 C-Atome aufweisenden Aminen oder Phenolen an Glycid oder 3-Äthyl-3-hydroxymethyl-oxetan.

Neben den genannten im Sinne der Isocyanatpolyadditionsreaktion difunktionellen Aufbaukomponenten können in besonderen Fällen, in welchen eine geringe Verzweigung der Polyurethane erwünscht ist, auch die in der Polyurethanchemie an sich bekannten tri- und höherfunktionellen Aufbaukomponenten in geringen Anteilen mitverwendet werden. Vorzugsweise werden die Aus-angskomponenten jedoch so gewählt, daß die Funktionalität im Mittel 2,1 nicht überschreitet.

Beim erfindungsgemäßen Verfahren können:

a) beliebige Mono- oder Diisocyanate und/oder im Sinne der Isocyanatpolyadditionsreaktion mono- oder difunktionelle Verbindungen mit gegenüber Isocyanatgruppen reaktionsfähigen Wasserstoffatomen mit Äthylenoxid-Einheiten aufweisenden hydrophilen Ketten und

b) beliebige Mono- oder Diisocyanate und/oder im Sinne der Isocyanatpolyadditonsreaktion mono- oder difunktionelle Verbindungen mit gegenüber Isocyanatgruppen reaktionsfähigen Wasserstoffatomen mit ionischen Gruppen oder in ionische Gruppen überführbaren Gruppen mitverwendet werden.

Zu den bevorzugten hydrophilen Aufbaukomponenten mit seitenständigen Äthylenoxid-Einheiten aufweisenden hydrophilen Ketten gehören sowohl Verbindungen der Formel

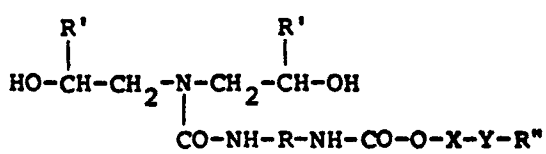

(I)

und/oder Verbindungen der Formel

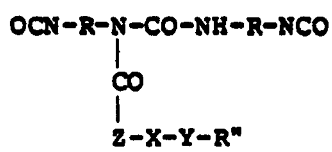

(II)

Besonders bevorzugte Aufbaukomponente a) sind solche der erstgenannten Formel (I).

In obigen Formeln (I) und (II) stehen

R für einen zweiwertigen Rest, wie er durch Entfernung der Isocyanatgruppen aus einem Diisocyanat der Formel $R(NCO)_2$ der vorstehend genannten Art erhalten wird,

R' für Wasserstoff oder einen einwertigen Kohlenwasserstoffrest mit 1 bis 8 Kohlenstoffatomen, vorzugsweise für Wasserstoff oder eine Methylgruppe,

R" für einen einwertigen Kohlenwasserstoffrest mit 1 bis 12 Kohlenstoffatomen, vorzugsweise einen unsubstituierten Alkylrest mit 1 bis 4 Kohlenstoffatomen,

X für den Rest, wie er durch Enfernen des endständigen Sauerstoffatoms aus einer Polyalkylenoxidkette mit 5 bis 90, vorzugsweise 20 bis 70 Kettengliedern erhalten wird, welche Kettenglieder zumindest zu 40 %, vorzugsweise zumindest zu 65 % aus Äthylenoxid-Einheiten bestehen und die neben Äthylenoxid-Einheiten auch Propylenoxid-, Butylenoxid- oder Styroloxid-Einheiten darstellen können, wobei unter den letztgenannten Einheiten Propylenoxid-Einheiten bevorzugt sind,

Y für Sauerstoff oder -NR'''-, wobei R''' bezüglich seiner Definition R" entspricht,

Z für einen Rest, der in seiner Bedeutung der Definition von Y entspricht.

Die Herstellung der Verbindungen der obengenannten Formeln (I) und (II) kann gemäß den Verfahrensweisen der DT-OS 2 314 512 bzw. 2 314 513 erfolgen, wobei in Ergänzung der

dort gemachten Offenbarung darauf hingewiesen wird, daß anstelle der dort als Ausgangsmaterial erwähnten Polyätheralkohole auch solche eingesetzt werden können, deren Polyäthersegment außer Äthylenoxid-Einheiten auch bis zu 60 Gew.-%, bezogen auf Polyäthersegment an Propylenoxid-, Butylenoxid- oder Styroloxid-, vorzugsweise Propylenoxid-Einheiten aufweisen. Der Anteil derartiger "gemischter Polyäthersegmente" kann in speziellen Fällen spezifische Vorteile mit sich bringen.

Auch Äthylenoxideinheiten aufweisende Dihydroxypolyäther des Molekulargewichtsbereichs 300-6000, vorzugsweise 500-3000, können als hydrophile Aufbaukomponente beim erfindungsgemäßen Verfahren mitverwendet werden. Auch hydrophile Äthergruppen, d.h. Polyäthylenoxid-Einheiten aufweisende Dihydroxypolycarbonate sind als hydrophile Aufbaukomponente geeignet.

Weitere besonders bevorzugte hydrophile Aufbaukomponenten zum Einbau endständiger oder seitenständiger hydrophiler Äthylenoxideinheiten aufweisender Ketten sind Verbindungen der Formel

HO-X-Y-R" oder HR'N-X-Y-R"

und/oder Verbindungen der Formel

OCN-R-N-CO-Z-X-Y-R"

wobei

X, Y, Z, R, R" die oben erläuterte Bedeutung haben.

Erfindungswesentliche Aufbaukomponenten b) sind beispielsweise im Sinne der Isocyanatpolyadditionsreaktion mono- oder difunktionelle Vertreter der im US-Patent 3 479 310, Kolonne 4, Zeile 11 bis Kolonne 5, Zeile 46, beispielhaft erwähnten Verbindungen bzw. die entsprechenden durch einfache Neutralisation oder Quaternierung zugänglicher Verbindungen mit salzartigen Gruppen. Geeignete Neutralisations- oder Quaternierungsmittel sind beispielsweise die in dem genannten US-Patent in Kolonne 6, Zeilen 14 bis 39 genannten Verbindungen.

Für den Einbau von tertiären Sulfoniumgruppen in das Polyurethan werden beispielsweise die in der US-Patentschrift 3 419 533, Kolonne 3, Zeile 75 bis Kolonne 4, Zeile 51 aufgeführten Verbindungen als Aufbaukomponenten eingesetzt.

Grundsätzlich ist es ohne Belang auf welche Weise die kationischen Zentren in das Polyurethan eingebaut wurden. So kann man z.B. außer den in den beiden genannten Patentschriften aufgeführten Methoden auch ein Epoxigruppen tragendes Polyurethan oder NCO-Präpolymer herstellen und durch Umsetzung der Epoxigruppe mit einem primären oder sekundären Amin das basische Zentrum einführen, das anschließend durch eine anorganische oder organische Säure oder ein Alkylierungsmittel in die Salzform übergeführt wird.

Beim erfindungsgemäßen Verfahren wird Art und Menge der Komponenten a) so gewählt, daß in den erfindungsgemäßen Polyurethanen 2 bis 50, vorzugsweise 11 bis 20 Gew.-% an in den Äthersegmenten eingebauten Äthylenoxid-Einheiten $-CH_2-CH_2-O-$ vorliegen. Die Art und Menge bzw. der Neutralisations- oder

Quarternierungsgrad der Komponenten b) wird beim erfindungsgemäßen Verfahren so gewählt, daß in den erfindungsgemäßen Polyurethanen 16 bis 250 Milliäquivalent pro 100 g, vorzugsweise 20 bis 100 Milliäquivalent pro 100 g an $=N^{\oplus}=$, $-COO^{\ominus}$ oder $-S^{\oplus}-$ -Gruppen vorliegen. Vorzugsweise liegt die Summe der Anzahl der Milliäquivalente eingebauter ionischer Gruppenpro 100 g Polyurethan und der Anzahl an "Pseudomilliäquivalenten" an eingebauten Äthylenoxid-Einheiten pro 100 g Polyurethan bei 40 bis 300 und besonders bevorzugt zwischen 60 und 200.

Unter einem "Pseudomilliäquivalent" an eingebauten Äthylenoxid-Einheiten soll hierbei die Menge an innerhalb einer Polyalkylenoxid-Kette eingebauten Äthylenoxid-Einheiten verstanden werden, die zur Löslichkeit des Polyurethans in Wasser den gleichen Beitrag liefert wie ein Milliäquivalent an eingebauten ionischen Gruppen. (Die Wirksamkeit der obengenannten ionischen Gruppen bezüglich ihres Beitrags zur Löslichkeit des Polyurethans hängt ausschließlich von der Anzahl der Milliäquivalente ionischer Gruppen und nicht von der Art der ionischen Gruppen ab.) Bei den wäßrigen Polyurethanlösungen hängt die Löslichkeit von der Konzentration der eingebauten hydrophilen Zentren im Polyurethan ab. Wie sich aufgrund eingehender Studien der Anmelderin herausstellte, kann man in einem beliebigen, in Wasser löslichen, ausschließlich ionisch modifiziertem Polyurethan bei ansonsten völlig analogem Molekülaufbau die ionischen Gruppen stets durch eine bestimmte Menge an innerhalb einer Polyätherkette angeordnetem Äthylenoxid zu ersetzen, daß ein entsprechendes ausschließlich nichtionisch modifiziertes Polyurethan erhalten wird, das in Wasser gleiche Löslichkeit aufweist, (wobei eine analoge Herstellungsweise der Polyurethanlösungen

vorausgesetzt wird), wenn die im ionisch modifizierten Polyurethan vorliegenden Milliäquivalente an ionischen Gruppen durch die gleiche Anzahl an "Pseudomilliäquivalenten" an nicht ionischen Gruppen ersetzt werden. So entsprechen einem Milliäquivalent an eingebauten ionischen Gruppen 0,5 g an innerhalb einer Polyätherkette eingebauten Äthylenoxid-Einheiten. Unter einem "Pseudomilliäquivalent" an nichtionischen Gruppen sind demzufolge 0,5 g an innerhalb einer Polyätherkette eingebauten Äthylenoxid-Einheiten zu verstehen. Demzufolge weist ein ausschließlich ionisch modifiziertes Polyurethan mit einem Gehalt an 40 Milliäquivalent pro 100 g an einer der obengenannten ionischen Gruppen die gleiche Wasserlöslichkeit auf wie ein analog aufgebautes und hergestelltes ausschließlich nichtionisch modifiziertes Polyurethan mit einem Gehalt an 20 g pro 100 g an innerhalb einer Polyätherkette eingebautem Äthylenoxid.

Die Durchführung des erfindungsgemäßen Verfahrens zur Herstellung der wasserlöslichen Polyurethane kann nach den an sich bekannten Methoden der Polyurethanchemie sowohl nach dem Einstufen- als auch dem Zweistufen-Verfahren (Präpolymer-Verfahren) erfolgen.

Bei der Herstellung der wasserlöslichen Polyurethane kommen die Reaktionspartner in einem Äquivalentverhältnis von Isocyanatgruppen zu gegenüber Isocyanatgruppen reaktionsfähigen Gruppen von 0,8:1 bis 2,5:1, vorzugsweise 0,95:1 bis 1,5:1 zum Einsatz. Bei der Verwendung eines NCO-Überschusses entstehen dabei naturgemäß NCO-Gruppen aufweisende Verbindungen, die bei ihrer Überführung in eine wäßrige Lösung mit dem Wasser unter Kettenverlängerung zu dem Endprodukt weiterreagieren. Dementsprechend beinhaltet das obige Äquivalent-

verhältnis alle am Aufbau der erfindungsgemäßen Polyurethane beteiligten Komponenten inclusive dem gegebenenfalls in Form wäßriger Lösungen verwendeten Aminogruppen aufweisenden Kettenverlängerungsmittel, nicht jedoch den Anteil des zur Lösung der Polyurethane eingesetzten Wassers, welches mit gegebenenfalls vorliegenden NCO-Gruppen aufweisenden Verbindungen unter Kettenverlängerungsreaktion reagiert. Im Rahmen der vorliegenden Erfindung werden im übrigen gegebenenfalls im Reaktionsgemisch vorliegende Carboxylgruppen (Komponente b)) nicht als gegenüber Isocyanatgruppen reaktionsfähige Gruppen betrachtet, was sich angesichts der Reaktionsträgheit dieser Gruppen gegenüber Isocyanatgruppen rechtfertigt.

Sowohl bei der Durchführung des Einstufen- als auch des Zweistufen-Verfahrens kann in Gegenwart oder auch Abwesenheit von Lösungsmitteln gearbeitet werden. Geeignete Lösungsmittel, insbesondere wenn, wie unten beschrieben - während oder im Anschluß an die Polyurethanherstellung die Überführung der Polyurethane in eine wäßrige Lösung beabsichtigt ist, sind beispielsweise mit Wasser mischbare, gegenüber Isocyanatgruppen indifferente Lösungsmittel mit einem unter 100°C liegenden Siedepunkt wie z.B. Aceton oder Methyläthylketon.

Bei der Durchführung des Einstufenverfahrens werden bevorzugt die oben unter 1. bis 7. genannten difunktionellen endständige, gegenüber Isocyanatgruppen reaktionsfähige Gruppen aufweisenden Verbindungen des Molekulargewichtsbereichs 500 bis 6000 mit den hydrophilen Kettenverlängerern a) und b) sowie dem gegebenenfalls mitzuverwendenden Kettenverlängerer

eines unter 500 liegenden Molekulargewichts gemischt. Der so erhaltenen Mischung wird anschließend die Diisocyanatkomponente in Abwesenheit von Lösungsmitteln zugegeben, wonach das Reaktionsgemisch vorzugsweise bei 50 bis 150°C liegenden Temperaturen, gegebenenfalls nach Zugabe der in der Polyurethanchemie an sich bekannten Katalysatoren zur Reaktion gebracht wird. Die Menge der Diisocyanatkomponenten wird hierbei so gewählt, daß ein NCO/OH-Verhältnis von 0,8 bis 1,05 vorliegt. Während der Reaktion steigt die Viskosität der Reaktionsmischung an, so daß der Mischung nach und nach eines der genannten Lösungsmittel zugegeben wird. Schließlich wird eine organische Lösung des aureagierten Polyurethans erhalten, deren Konzentration vorzugsweise auf 10 bis 70, insbesondere 15 bis 55, Gew.-% Feststoff eingestellt wird. Bei diesem Einstufen-Verfahren empfiehlt sich insbesondere die Verwendung von tertiären Aminen mit 2 alkoholischen Hydroxylgruppen als Komponente b). Falls als Komponente b) Verbindungen eingesetzt werden, welche in ionische Gruppen überführbare Gruppen aufweisen, empfiehlt sich diese Überführung durch an sich bekannte Neutralisation oder Quaternierung im Anschluß an die Polyadditionsreaktion entweder in organischer Lösung oder dergestalt, daß das in organischer Lösung vorliegende Polyurethan während seiner Überführung in eine wäßrige Lösung durch im Wasser vorliegende Neutralisationsmittel neutralisiert wird.

Die Überführung der Polyurethane in eine wäßrige Lösung erfolgt zweckmäßigerweise durch Zugabe von Wasser zu der gerührten Lösung oder Schmelze. Nach destillativer Entfernung des gegebenenfalls vorhandenen Lösungsmittels bleibt eine rein wäßrige Lösung zurück.

Bei der Durchführung des Zweistufenverfahrens wird vorzugsweise zunächst in der Schmelze aus überschüssigem Diisocyanat, höhermolekularer Verbindung mit gegenüber Isocyanatgruppen reaktionsfähigen Gruppen der oben unter 1. bis 7. beispielhaft genannten Art sowie hydrophilem Kettenverlängerer a) und gegebenenfalls b) unter Einhaltung eines NCO/OH-Verhältnisses von 1,1:1 bis 3,5:1, vorzugsweise 1,2:1 bis 2,5:1, in Abwesenheit von Lösungsmitteln oder auch bereits in Gegenwart von Lösungsmitteln ein NCO-Präpolymer hergestellt, welches bei Abwesenheit von Lösungsmitteln anschließend, beispielsweise in einem geeigneten Lösungsmittel aufgenommen wird. Die so erhaltene Lösung des Präpolymeren kann dann in an sich bekannter Weise mit dem Kettenverlängerungsmittel der oben beispielhaft aufgeführten Art eines unter 300 liegenden Molekulargewichts zur Reaktion gebracht werden. Zur Herstellung der erfindungsgemäßen Polyurethanlösungen empfiehlt sich eine besondere Variante des Zweistufenverfahrens, bei welcher die beschriebene Lösung des NCO-Präpolymeren mit der Lösung des Kettenverlängerungsmittels - hier werden bevorzugt die genannten Diamine bzw. Hydrazinderivate als Kettenverlängerer eingesetzt - in geringen Mengen Wasser oder einem Wasser/Lösungsmittelgemisch so versetzt, daß das NCO/NH-Verhältnis zwischen 2,5 und 1,05 liegt. Diese Umsetzung kann bei Raumtemperatur oder auch vorzugsweise bei 25-60°C erfolgen. Durch nachträgliche Zugabe des restlichen Wassers und anschließender Entfernung des Lösungsmittels wird schließlich die wäßrige Polyurethanlösung erhalten. Es ist bei dieser Verfahrensvariante jedoch auch möglich, den Kettenverlängerer in der Gesamtmenge des in der Lösung schließlich vorliegenden Wassers (50-200 Gew.-%, bezogen auf festes Polyurethan) zu

lösen. Bei der Durchführung des Zweistufenverfahrens ist es durchaus möglich und oft auch bevorzugt die Komponente b) nicht in das Präpolymer einzubauen, sondern vielmehr wäßrige Lösungen von Diaminocarboxylaten bei der beschriebenen Kettenverlängerungsreaktion anstelle oder in Kombination mit den vorstehend genannten Diaminen bzw. Hydrazinderivaten einzusetzen.

Das beschriebene Zweistufenverfahren wird jedoch ohne größere Schwierigkeiten vorzugsweise lösungsmittelfrei durchgeführt und zwar dergestalt, daß man das beschriebene NCO-Präpolymer lösungsmittelfrei herstellt und als Schmelze in das Wasser einrührt, wobei auch hier die genannten Aminogruppen aufweisenden ionischen oder nichtionischen Kettenverlängerer in im Wasser gelöster Form vorliegen können.

Selbstverständlich ist es aber auch möglich, das Polyurethan wie bei festen Thermoplasten üblich, in der Schmelze aus den Komponenten aufzubauen, z.B. in einer Form, auf einem Stahlband oder in einer Schnecke, das feste Produkt zu zerkleinern und anschließend in Wasser zu lösen.

Die erfindungsgemäßen in Wasser löslichen Polyurethane sind von überwiegend linearem Molekularaufbau und sind durch einen Gehalt an innerhalb einer Polyätherkette eingebautem Äthylenoxid von 2 bis 50, vorzugsweise 11 bis 20 Gew.-% und einem Gehalt an $=N^{\oplus}=$, $-COO^{\ominus}$ oder $-S^{\oplus}-$ -Gruppen von 16 bis 250, vorzugsweise 20 bis 100 Milliäquivalent pro 100 g gekennzeichnet. Vorzugsweise ist die seitenständige Polyalkylenoxidkette, die die erfindungswesentlichen Äthylenoxid-Einheiten aufweist über Gruppierungen

i) der Formel

-N-
 |
CO-NH-R-NH-CO-O-X-Y-R"

oder

ii) der Formel

-N-
 |
CO-Z-X-Y-R"

verbunden, wobei
R, R", R"', X, Y und Z die oben genannte Bedeutung haben.

Die vorstehend beschriebene Variante des erfindungsgemäßen Verfahrens stellt lediglich einen bevorzugten, nicht jedoch den einzigen Weg zu den erfindungsgemäßen Polyurethanen dar. Ein weiterer Weg zu den erfindungsgemäßen Polyurethanen besteht beispielsweise in der Einführung der nichtionischen seitenständigen hydrophilen Gruppen in ein bereits ionische Gruppen oder in ionische Gruppen überführbare Gruppen aufweisendes, vorzugsweise lineares Polyurethanelastomer durch Umsetzung dieses Elastomeren mit hydrophilen Monoisocyanaten der Formel

OCN-R-NH-CO-O-X-Y-R"

in welcher
R, X, Y, R" und R"' die vorstehend genannte Bedeutung haben.

Die Herstellung derartiger hydrophiler Monoisocyanate geschieht in Analogie der in der DT-OS 2 314 512 beschriebenen Verfahrensweise wobei jedoch auch hier in Ergänzung der dort gemachten

Offenbarung darauf hingewiesen wird, daß anstelle der dort als Ausgangsmaterial erwähnten monofunktionelle Polyätheralkohole auch solche eingesetzt werden können, deren Polyäthersegment außer Äthylenoxid-Einheiten auch bis zu 60, vorzugsweise bis zu 35 Gew.-%, bezogen auf Polyäthersegment an Propylenoxid-, Butyloxid- oder Styroloxid, vorzugsweise Propylenoxid-Einheiten aufweisen.

Bei der Herstellung der erfindungsgemäßen Polyurethane unter Verwendung dieser hydrophilen Monoisocyanate wird vorzugsweise aus den genannten Ausgangsmaterialien ein lineares Polyurethan hergestellt unter Verwendung eines Äquivalentverhältnisses Isocyanatgruppen : gegenüber Isocyanatgruppen reaktionsfähigen Gruppen von vorzugsweise 1 : 1, welches ionische Gruppen bzw. in ionische Gruppen überführbare Gruppen jedoch noch keine hydrophilen Polyäthersegmente aufweist. Dieses lineare Polyurethanelastomer wird dann in der Schmelze oder in einem geeigneten Lösungsmittel beispielsweise der obengenannten Art bei 50 bis 150°C mit den hydrophilen Monoisocyanaten umgesetzt, wobei vor allem eine Addition der Isocyanatgruppe des hydrophilen Monoisocyanats an die aktiven Wasserstoffatome der im linearen Polyurethan vorliegenden Urethan- und/oder Harnstoffgruppen eintritt. Gegebenenfalls vorliegende in ionische Gruppen überführbare Gruppen werden dann anschließend durch an sich bekannte Neutralisation- bzw. Quarternierung zumindest teilweise in die entsprechenden ionischen Gruppen überführt. Bei dieser Ausführungsform der Herstellung der erfindungsgemäßen Polyurethane ist bei Verwendung von Carboxylgruppen aufweisenden Aufbaukomponenten, deren Carboxylgruppen anschließend durch Neutralisation in Carboxylatgruppen überführt werden sollen, darauf zu achten, daß nur solche Carboxylgruppen aufweisende Verbindungen mitverwendet werden, deren Carboxylgruppen gegenüber Isocyanatgruppen eine geringere Reaktivität gegenüber Isocyanatgruppen aufweisen als Urethan- oder Harnstoffgruppen.

Ferner ist eine Arbeitsweise besonders bevorzugt, nach welcher ein Präpolymer mit endständigen NCO-Gruppen mit einem monofunktionellen hydrophilen Polyäther umgesetzt wird, so daß ein polymeres Polyurethan mit endständigen hydrophilen Polyäthersegmenten gebildet wird. Selbstverständlich kann ein solches Produkt auch nach einem Einstufenverfahren erhalten werden, indem ein entsprechender hydrophiler monofunktioneller Polyäther beim Aufbau des Polyurethans als Aufbaukomponente mit eingesetzt wird. Schließlich kann man selbstverständlich auch ein Präpolymer mit endständigen OH, SH, $NH_2$, NHR oder COOH Gruppen mit einem hydrophilen Monoisocyanat der Formel

OCN-R-NH-CO-O-X-Y-R"

umsetzen. Hierbei haben R, X, Y, R" die vorstehend genannte Bedeutung.

Diese Gruppe von erfindungsgemäßen Polyurethanen ist durch die Gruppierung

-U-R-NH-CO-O-X-Y-R"    gekennzeichnet,

wobei

U für -O-CO-NH-, -NH-CO-NH-, -NH-CO-, -S-CO-NH- steht und

R, X, Y, R" die vorstehend genannte Bedeutung haben.

Sofern Polyurethane mit endständigen monofunktionellen hydrophilen Polyäthern hergestellt werden, wird vorzugsweise für eine zumindest geringe Verzweigung dieser Produkte Sorge getragen, z.B. durch anteilige Mitverwendung tri- oder polyfunktioneller Aufbaukomponenten oder durch teilweise Allophanatisierung, Trimerisierung oder Biuretisierung.

Das so erhaltene als Schmelze oder als Lösung vorliegende erfindungsgemäße Polyurethan kann dann durch Vermischen mit Wasser und gegebenenfalls anschließendem Abdestillieren des Hilfslösungsmittels in eine wäßrige Lösung überführt werden.

Die erfindungsgemäßen wäßrigen Polyurethanlösungen sind klar und zeigen auch beim Verdünnen auf einen Feststoffgehalt von z.B. 5-10 % keinen Tyndall-Effekt. Bei Raumtemperstur aus den Lösungen aufgetrocknete Schichten lösen sich wieder glatt und kar in Wasser.

Die Lösungen sind trotz ihres relativ hohen Gehaltes an ionischen Gruppen weitgehend unempfindlich gegen Elektrolyte; dies erlaubt z.B. die sauer katalysierte Vernetzung mit Formaldehyd oder Formaldehydderivaten; ebenso ist ihre Pigmentierung mit elektrolyt-aktiven Pigmenten oder Farbstoffen möglich. Eine weitere Eigenschaft der erfindungsgemäßen Dispersionen ist ihre Verträglichkeit mit Alaunlösungen bei der Papierleimung.

Die Lösungen der Polyurethanmassen in Wasser sind stabil, lager- und versandfähig und können zu beliebig späterem Zeitpunkt, z. B. formgebend, verarbeitet werden. Sie trocknen im allgemeinen unmittelbar zu formstabilen Kunststoffüberzügen auf, jedoch kann die Formgebung der Verfahrensprodukte auch in Gegenwart von an sich bekannten Vernetzungsmitteln erfolgen. Je nach der gewählten chemischen Zusammensetzung und dem Gehalt an Urethangruppen erhält man Polyurethane mit unterschiedlichen Eigenschaften. So können weiche klebrige Massen, thermoplastische und gummielastische Produkte der

verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 1oo - 18o°C, thermoplastisch verarbeiten, sofern sie nicht chemisch vernetzt sind.

Die Verfahrensprodukte sind zur Beschichtung bzw. zum Überziehen und zum Imprägnieren von gewebten und nichtgewebten Textilien, Leder, Papier, Holz, Metallen, Keramik, Stein, Beton, Bitumen, Hartfaser, Stroh, Glas, Porzellan, Kunststoffen der verschiedensten Art, Glasfasern, zur antistatischen und knitterfreien Ausrüstung, als Binder für Vliese, Klebstoffe, Haftvermittler, Kaschierungsmittel, Hydrophobiermittel, Weichmacher, Bindemittel, z. B. für Kork- oder Holzmehl, Glasfasern, Asbest, papierartige Materialien, Plastik- oder Gummiabfälle, keramische Materialien, als Hilfsmittel im Zeugdruck und in der Papierindustrie, als Zusatz zu Polymerisaten, als Schlichtemittel, beispielsweise für Glasfasern, und zur Lederausrüstung geeignet.

Durch Mitverwendung von Vinylpolymerisaten oder aktiven bzw. inaktiven Füllstoffen kann man die Eigenschaften der Verfahrensprodukte abwandeln. Verwendbar sind beispielsweise Polyäthylen, Polypropylen, Polyvinylacetat, Äthylen-Vinylacetat-Copolymerisate, die gegebenenfalls (teilweise) verseift und/oder mit Vinylchlorid gepfropft sein können, Styrol-Butadien-Copolymerisate, Äthylen-(Pfropf)-Copolymerisate, Polyacrylate, Ruß, Kieselsäure, Asbest, Talkum, Kaolin, Titandioxid, Glas als Pulver oder in Form von Fasern, Cellulose. Je nach gewünschtem Eigenschaftsbild und Verwendungszweck der Endprodukte können bis zu 7o %, bezogen auf Gesamttrockensubstanz, solcher Füllstoffe im Endprodukt enthalten sein.

Selbstverständlich können auch Farbstoffe, Füllstoffe, Pigmente, Weichmacher oder die rheologischen Eigenschaften beeinflussende Zusätze beigefügt werden, ebenso z.B. Polymerdispersionen, Ruß- und Kresolsäure-Sole.

Die Trocknung der nach verschiedenen Applikationstechniken erhaltenen Produkte kann bei Raumtemperatur oder bei erhöhter Temperatur erfolgen.

Die nachfolgenden Beispiele sollen die Zusammensetzung, Herstellung und einige physikalische Eigenschaften erläutern.

Beispiel 1

262 g (0,444 Mol) eines auf Propylenglykol gestarteten Polyäthylenoxid/Polypropylenoxid-Diols mit einem Anteil an Polyäthylenoxid von 70 Gew.-%, OHZ 190 werden zusammen mit 50 g (0,023 Mol) eines nichtionisch-hydrophilen Kettenverlängerers, der in Analogie zu der in US-PS 3 905 929 beschriebenen Arbeitsweise durch Umsetzung von äquivalenten Teilen

i) eines Polyäthermonoalkohols aus n-Butanol, Äthylenoxid und Propylenoxid (im Gewichtsverhältnis 83:17) der OHZ 30;
ii) Hexandiisocyanat-1,6 und
iii) Diäthanolamin

hergestellt wird und ein mittleres Molekulargewicht von 2140 aufweist, 1 Stunde bei 120°C und 15 Torr im Wasserstrahlpumpen-Vakuum entwässert. Man läßt auf 80°C abkühlen, fügt 102,3 g Hexandiisocyanat-1,6 zu und rührt 2 Stunden bei 120°C nach. Das erhaltene Prepolymer weist einen NCO-Gehalt von 2,07 % auf, es wird unter Kühlung mit 100 ml Aceton verdünnt, dann werden bei 60°C (Badtemperatur) 9,5 g (0,08 Mol) N-Methyldiäthanolamin zugegeben und 1 Stunde bei 60°C Außentemperatur verrührt. Man verdünnt bei konstanten Temperaturbedingungen mit weiteren 200 ml Aceton, fügt 1,6 g (0,022 Mol) 1,2-Diaminopropan in 50 ml Aceton gelöst zu, rührt eine Stunde nach und quaterniert dann eine Stunde mit 9,5 g (0,075 Mol) Dimethylsulfat. Die Ammoniumsalzbildung wird durch Zugabe von 8 g $H_3PO_4$ (85 %ig) gelöst in 50 ml Wasser vervollständigt, man rührt weiter bei 60°C Außentemperatur bis sich IR-spektroskopisch kein NCO mehr nachweisen läßt (was im allgemeinen nach 1 Stunde der Fall ist) und verdünnt bei 50°C mit 750 ml Wasser. Nach Abdestillation des

Acetons bei 50°C im Wasserstrahlpumpenvakuum verbleibt eine kationische Polyurethanlösung mit einem Feststoffgehalt von 37,5 Gew.-%, einer Viskosität von 700 cP bei 22°C, einem pH von 2,4 sowie bezogen auf 100 g Polyurethan 20 Milliäquivalenten an quatärem Stickstoff und 100 Pseudo-Milliäquivalenten an Äthylenoxid-Einheiten. 50 g dieser auf 10 % Feststoff eingestellten Polyurethanlösung können mit 10 g einer 10 %igen Kochsalzlösung vermischt werden, ohne daß Koagulation eintritt (s. allgemeine Vorschrift zur Bestimmung der Elektrolytstabilität ionischer PU-Lösungen).

Allgemeine Vorschrift zur Bestimmung der Elektrolytstabilität ionischer PU-Lösungen

50 ml einer auf 10 % Feststoff eingestellten ionischen PU-Lösung werden in einem Erlenmeyerkolben vorgelegt und unter kräftigem Rühren mit einem Magnetrührer bei Raumtemperatur tropfenweise aus einer Vorratsbürette mit 10 %iger wäßriger NaCl-Lösung versetzt. Nach zunehmender Trübung tritt zumeist schlagartige Koagulation der Lösung ein, jedenfalls bei einem Verbrauch an Kochsalzlösung $< 20$ ml. Bei noch höherer Elektrolytstabilität bereitet die Endpunktbestimmung manchmal Schwierigkeiten, da die Koagulation nur zögernd unter teilweiser Ausflockung eintritt. In diesem Fall wird die Endpunktbestimmung erleichtert, wenn man die Kochsalzlösung in 5 ml-Portionen zusetzt, nach jeder Zugabe 5 Minuten nachrührt und dann die Beurteilung vornimmt.

Beispiel 2

177 g (0, 300 Mol) eines auf Propylenglykol gestarteten Polyätherdiols gemäß Beispiel 1 sowie 175 g (0, 100 Mol) eines Polyesterdiols aus Adipinsäure, Phthalsäureanhydrid und Äthylenglykol sowie 107, 5 g (0, 050 Mol) des nichtionisch hydrophilen Kettenverlängerers gemäß Beispiel 1 wurden eine Stunde bei 120°C, 15 Torr entwässert, auf 80°C gekühlt und mit 109 g (0, 650 Mol) Hexandiisocyanat versetzt. Man läßt 2 Stunden bei 120°C rühren, wobei ein Prepolymer mit einem NCO-Gehalt von 2, 19 % resultiert. Unter Kühlung wird mit 200 ml Aceton verdünnt. Bei einer Badtemperatur von 60°C werden 11, 9 g (0, 100 Mol) N-Methyldiäthanolamin zugefügt und 60 Min. bei 60°C verrührt. Bei gleicher Temperatur werden 3, 6 g (0, 050 Mol) 2-Diaminopropan zugegeben, mit weiteren 200 ml Aceton verdünnt 60 Min. gerührt und dann mit 11, 9 g (0, 094 Mol) Dimethylsulfat quaterniert. Eine Stunde später werden zur Entfernung von im IR-Spektrum noch nachweisbaren NCO-Gruppen 80 g Wasser zugegeben mit insgesamt weiteren 1200 ml Aceton verdünnt und die nach 3 Stunden NCO-freie acetonische Polyurethanlösung mit 8 g Phosphorsäure (85 %ig) versetzt. Bei 50°C wird mit 1, 4 l auf 50°C vorgewärmtem Wasser verdünnt und das Aceton im Wasserstrahlpumpen-Vakuum abdestilliert. Man erhält eine kationische, wäßrige Polyurethanlösung, die bei 22°C eine Viskosität von 4500 cP sowie einen Feststoffgehalt von 20, 5 % und einen pH-Wert von 2, 3 aufweist[1]. 50 ml der auf 10 % Feststoff eingestellten Lösung können mit 25 ml einer 10 %igen Kochsalzlösung vermischt werden bevor die erste sichtbare Ausfällung eintritt.

---

1) Bezogen auf 100 g Feststoff enthält die Lösung 17 Milliäquivalent $N^+$, sowie 68 Pseudo-Milliäquivalent Äthylenoxid-Einheiten.

**Beispiel 3** (Vergleichsbeispiel)

Als Vergleichsbeispiel zu Beispiel 2 wurde eine gleichartige Polyurethanlösung ohne hydrophile Äthylenoxid-Einheiten hergestellt, wobei der Anteil an quartärem Stickstoff so erhöht wurde, daß er der Summe an Milliäquivalenten quartärem Stickstoff und Pseudomilliäquivalenten Äthylenoxid gemäß Beispiel 2 entsprach.

Zusammensetzung:

175 g (0, 100 Mol) eines Polyesterdiols gemäß Beispiel 2
84 g (0, 500 Mol) Hexandiisocyanat-1, 6
34 g (0, 285 Mol) N-Methyldiäthanolamin
5, 7 g (0, 078 Mol) 1, 2-Diaminopropan
34 g (0, 270 Mol) Dimethylsulfat
8 g o-Phosphorsäure (85 %ig)
800 ml Wasser (auf 50°C vorgewärmt)

Die Herstellung der wäßrigen Polyurethanlösung erfolgte gemäß Beispiel 2. Die resultierende kationische Polyurethanlösung weist einen Feststoffgehalt von 31 Gew. -%, eine Viskosität von 600 cP bei 22°C sowie einen pH-Wert von 1, 8 auf. Bezogen auf 100 g Feststoff enthält die Lösung 85 Milliäquivalent an quartärem Stickstoff. 50 ml der auf 10 % Feststoff eingestellten Lösung koagulieren bereits bei Zugabe von weniger als 1 ml einer 10 %igen Kochsalzlösung.

**Beispiel 4**

133 g (0,074 Mol) eines Polyesterdiols aus Adipinsäure und Tetraäthylenglykol mit einem mittleren Molgewicht von 1800 und 125 g (0,058 Mol) des nichtionisch-hydrophilen Kettenverlängerers gemäß Beispiel 1 werden 30 Minuten bei 15 Rorr und 120°C entwässert, auf 80°C gekühlt und 61,3 g Hexandiisocyanat-1,6 hinzugefügt. Nach 2stündigem Rühren bei 120°C erhält man ein Präpolymer mit einem NCO-Gehalt von 5,35 Gew.-%. Unter Abkühlung wird mit 100 ml Aceton verdünnt, bei 60°C (Badtemperatur) werden 23,8 g (0,200 Mol) N-Methyldiäthanolamin mit 50 ml Aceton verdünnt zugefügt, eine Stunde bei 60°C gerührt, 0,25 g (0,003 Mol) 1,2-Diaminopropan zugegeben und eine Stunde später bei gleicher Temperatur mit 23,8 g (0,189 Mol) Dimethylsulfat quaterniert. 30 Minuten nach der Dimethylsulfatzugabe werden 20 ml Wasser zugefügt, dann wird bei 60°C Badtemperatur gerührt bis sich IR-spektroskopisch kein NCO mehr nachweisen läßt. Es werden 6 g 85 %ige Phosphorsäure und danach 900 ml Wasser zugegeben und das Aceton bei 50°C im Wasserstrahlvakuum entfernt. Die resultierende wäßrige Polyurethanlösung weist bei einem Feststoffgehalt von 30 Gew.-% eine Viskosität von 67 cP bei 22°C und einen pH-Wert von 2,3 auf. 100 g Feststoff enthalten 53 Milliäquivalent an quartärem Stickstoff sowie 50 Pseudomilliäquivalent an Äthylenoxid-Einheiten. 50 ml einer auf 10 % Feststoff eingestellten Probe dieser Lösung vertragen den Zusatz von 100 ml einer 10 %igen Kochsalzlösung, ohne daß Koagulation eintritt.

Beispiel 5:

230 g eines technischen Polyäthylenglykolgemisches mit einem mittleren Molekulargewicht von 230 (wie es bei der Destillation von Tetraäthylenglykol als Rückstand anfällt) und 119 g N-Methyldiäthanolamin werden miteinander vermischt und in die gerührte Mischung werden bei 80°C 262 g eines technischen Polyisocyanatgemisches, wie es als Destillationsrückstand bei der Produktion von Hexandiisocyanat-1, 6 anfällt (NCO-Gehalt ca. 32 Gew. -%) langsam eingetropft. 30 Minuten nach Beendigung des Zutropfens läßt sich IR-spektroskopisch kein NCO mehr nachweisen. Unter Kühlung werden nun gleichzeitig 173 g Phosphorsäure (85 %ig) und 1769 g Wasser zugegeben. Die resultierende dünnflüssige Polyurethanlösung hat bei einem Feststoffgehalt von 30 Gew. -% einen pH-Wert von 1, 6. 50 ml einer auf 10 % Feststoff eingestellten Probe dieser Dispersion vertragen 100 ml einer 10 %igen Kochsalzlösung ohne Koagulation.

Patentansprüche

1) Elektrolytstabile wäßrige Lösungen von Polyurethanionomeren mit im wesentlichen linearem Molekularaufbau, gekennzeichnet durch

a) hydrophile Polyalkylenoxid-Polyätherketten mit einem Gehalt an gebundenen Äthylenoxid-Einheiten von 2 bis 50 Gew.-%, bezogen auf das gesamte Polyurethan, und

b) einen Gehalt an $=N^{\oplus}=$, $-S^{\oplus}-$ oder $-COO^{\ominus}$-Gruppen von 16 bis 250 Milliäquivalent pro 100 g.

2) Verfahren zur Herstellung von in Wasser löslichen Polyurethanen mit im wesentlichen linearer Molekülstruktur durch Umsetzung von organischen Diisocyanaten mit im Sinne der Isocyanatpolyadditionsreaktion difunktionellen endständige gegenüber Isocyanatgruppen reaktionsfähige Wasserstoffatome aufweisenden organischen Verbindungen des Molekulargewichtsbereichs 300 bis 6000 unter Mitverendung von die Löslichkeit der Polyurethane gewährleistenden Aufbaukomponenten mit hydrophilen Gruppen bzw. in derartige hydrophile Gruppen überführbaren Gruppen, wobei die zumindest teilweise Überführung der letzgenannten Gruppen in hydrophile Gruppen während oder anschließend an die Polyadditionsreaktion erfolgt, sowie gegebenenfalls unter Mitverwendung der in der Polyurethanchemie an sich bekannten Kettenverlängerungsmittel eines unter 300 liegenden Molekulargewichts sowie gegebenenfalls unter Mitverwendung der in der Polyurethanchemie üblichen Hilfs- und Zusatzstoffe, dadurch gekennzeichnet, daß als Aufbaukomponenten mit hydrophilen Gruppen bzw. mit in hydrophile Gruppen überführbaren Gruppen sowohl

a) Mono- oder Diisocyanate und/oder im Sinne der Isocyanatpolyadditonsreaktion mono- oder difunktionelle Verbindungen mit gegenüber Isocyanatgruppen reaktionsfähigen Wasserstoffatomen mit Äthylenoxid-Einheiten aufweisenden hydrophilen Ketten als auch

b) Mono- oder Diisocyanate und/oder im Sinne der Isocyanat-Polyadditionsreaktion mono- oder difunktionelle Verbindungen mit gegenüber Isocyanatgruppen reaktionsfähigen Wasserstoffatomen mit ionischen Gruppen oder in ionische Gruppen überführbaren Gruppen

mitverwendet werden, wobei die Art und Menge bzw. Neutralisierungs- oder Quaternierungsgrad der Komponenten a) und b) so bemessen wird, daß im letztlich erhaltenen Polyurethan 2 bis 50 Gew.-% an eingebauten Äthylenoxid-Einheiten und 16 bis 250 Milliäquivalent pro 100 g an ionischen Gruppen vorliegen.

Europäisches Patentamt

# EUROPÄISCHER RECHERCHENBERICHT

Nummer der Anmeldung

0000347

EP 78 10 0254

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 308 646 (RHONE-POULENC)<br>* Seite 12; Patentanspruch 1; Seite 2 und 3, Beispiel 1; Seite 4, Beispiele 5 und 6 *<br>-- | 1,2 |
| X | FR - A - 2 331 581 (BAYER)<br>* Seite 28 und 29; Patentansprüche 1 bis 3; Seite 2, Zeile 12-30 *<br>---- | 1,2 |

**KLASSIFIKATION DER ANMELDUNG (Int.Cl.²)**

C 08 G 18/08
C 08 G 18/48
C 08 G 18/80

**RECHERCHIERTE SACHGEBIETE (Int. Cl.²)**

C 08 G 18/08
C 08 G 18/48
C 08 G 18/80

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 04-09-1978 | VAN PUYMBROECK |